# EUROPEAN PATENT SPECIFICATION

(11) **EP 0 754 615 B1**
(45) Date of publication and mention of the grant of the patent: **18.07.2001**
(21) Application number: 96109705.2
(22) Date of filing: 17.06.1996
(51) Int. Cl.: B62J 15/02

(54) **Front fender mounting structure for motorcycle or tricycle**
Vorderschutzblech-Befestigungsvorrichtung für Motorrad oder Dreirad
Structure de montage de garde-boue avant pour motocyclette ou tricycle

(30) Priority: 21.07.1995 JP 18579895
(43) Date of publication of application: 22.01.1997
(73) Proprietor: HONDA GIKEN KOGYO KABUSHIKI KAISHA, Minato-ku Tokyo (JP)
(72) Inventor: Okazaki, Yasunori, Wako-shi, Saitama (JP); Nakagomi, Yoshio, Wako-shi, Saitama (JP)
(74) Representative: Liska, Horst, Dr.-Ing.

(56) References cited:
- FR-A- 2 673 415
- GB-A- 846 420
- JP-A- 3 136 985
- JP-A- 62 231 879

## Description

The present invention relates to a motorcycle or a tricycle with a front fender mounting structure according to the preamble of claim 1.

The structure of this type has been disclosed, for example, in Japanese Patent JP 62 231 879 A.

The above structure has a disadvantage that a fender rear half member of a front fender is fastened to a bottom bridge of a front fork at a position difficult in mounting/dismounting operation from a recessed portion of a leg shield, and thereby the mounting/dismounting of a fender front half member can be performed but the mounting/dismounting of the fender rear half member cannot be performed under the presence of the leg shield. This makes poor the workability upon maintenance, and makes it impossible to freely select the assembling order because the led shield must be assembled after the assembly of the front fender.

In view of the foregoing, the present invention has been made, and an object of the present invention is to provide a front fender mounting structure for a motorcycle or a tricycle which is capable of mounting/dismounting a front fender under the presence of a leg shield, thereby improving workability upon maintenance and increasing the degree of freedom in assembling order.

The above object is obtained with a motorcycle or a tricycle with a front fender mounting structure according to claim 1.

Particular embodiments of the invention are disclosed in the dependent claims 2 to 4.

There is provided a front fender mounting structure for a motorcycle or a tricycle in which a front fender composed of a fender front half member and a fender rear half member which can be separated from each other is mounted on a bottom bridge of a front fork in such a manner as to cover the upper side of a front wheel rotatably supported by the front fork, and a recessed portion in which the front fender is disposed in such a manner as to be allowed in the motion accompanied by the steering operation of the front fork is provided in the front surface of the lower portion of a led shield for covering the front side of legs of a driver, characterized in that the fender front half member is removably fixed to the bottom bridge from the outside of the recessed portion of the leg shield; and the right and left front portions of the fender rear half portion having on the upper portion an engagement portion removably engageable with a locking portion provided on the rear portion of the bottom bridge are removably fixed to the bottom bridge from the outside of the recessed portion.

The fender front half member is removably fixed to the bottom bridge from the outside of the recessed portion of the leg shield; and the right and left front portions of the fender rear half portion having on the upper portion an engagement portion removably engageable with a locking portion provided on the rear portion of the bottom bridge are removably fixed to the bottom bridge from the outside of the recessed portion. Accordingly, it is possible to mount/dismount the front fender on/from the bottom bridge under the presence of the leg shield, and to improve the workability upon maintenance and increase the degree of freedom in assembling order.

In addition to the configuration of the invention described in claim 1, the right and left rear portions of the fender front half member and the right and left front portions of the fender rear half member are co-fastened to the bottom bridge by means of screw members rotatable from the outside of the recessed portion of the leg shield.

It is therefore possible to reduce the number of mounting parts.

Hereinafter, one embodiment of the present invention will be described with reference to the accompanying drawings.
Fig. 1: A side view showing a front fender mounting structure, parts partially cutaway.
Fig. 2: A sectional view taken on line 2-2 of Fig. 1 showing a state in which a leg shield is omitted.
Fig. 3: An exploded perspective view of a front fender.
Fig. 4: An exploded side view of the front fender.
Fig. 5: A plan view seen in the direction of an arrow 5 of Fig. 4.
Fig. 6: A front view showing opposite ends of a fender front half member and a fender rear half member.
Fig. 7: A perspective view showing a state in which a front fork is turned leftward from the state shown in Fig. 1.

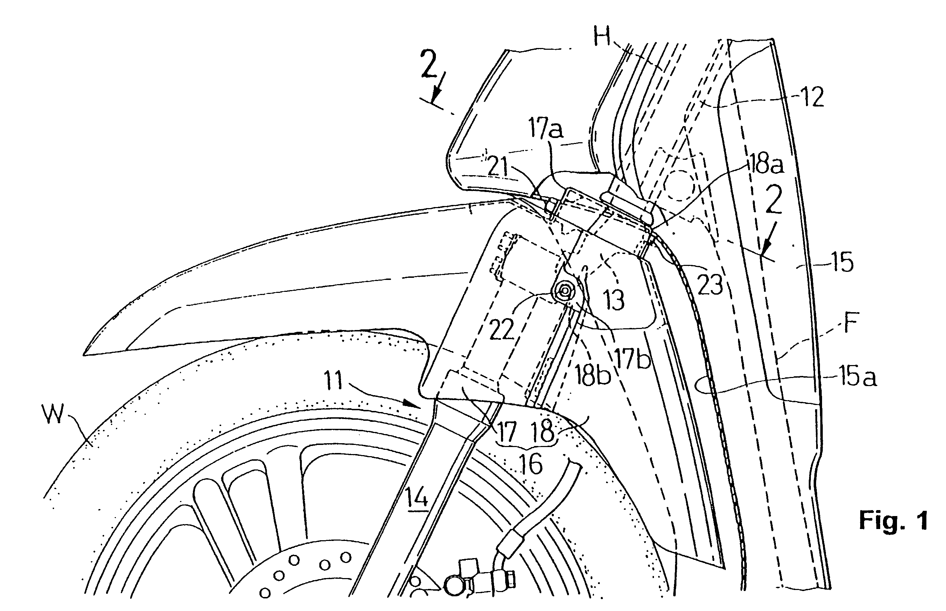

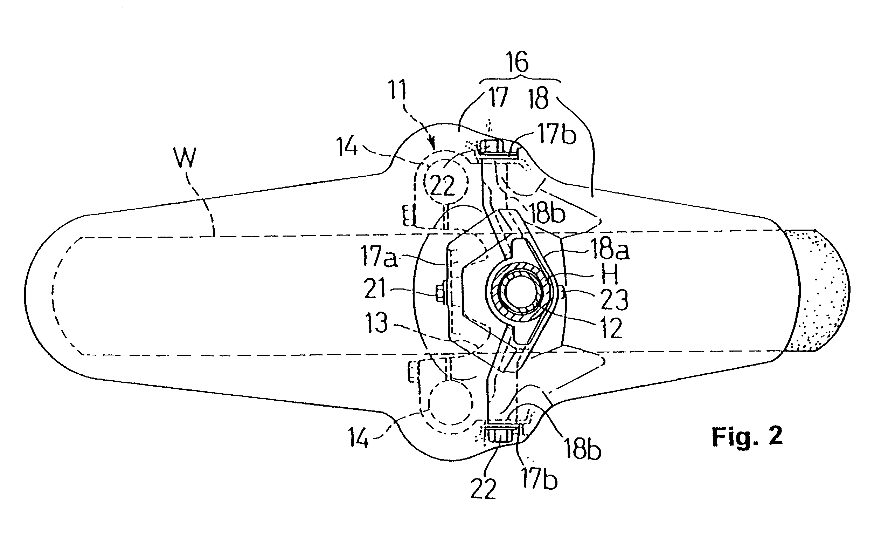

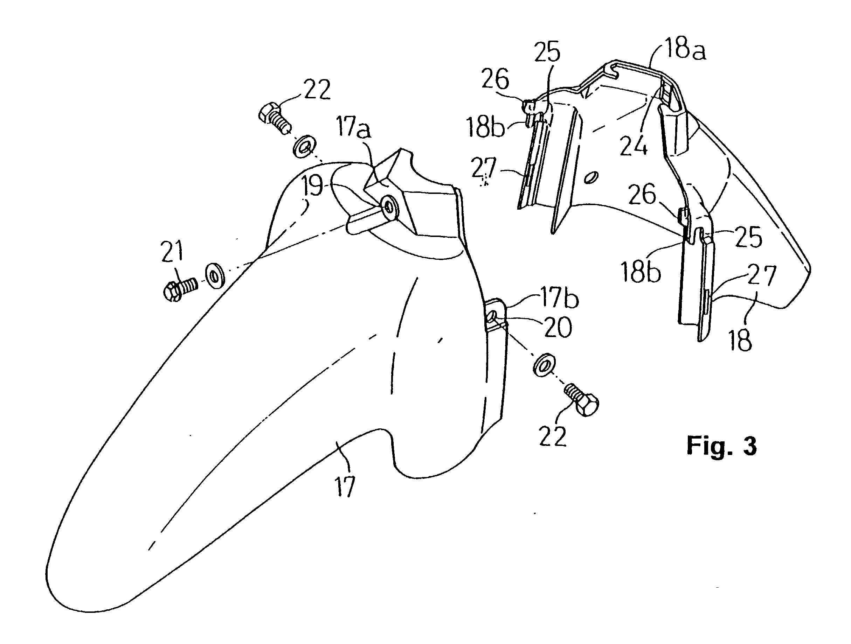

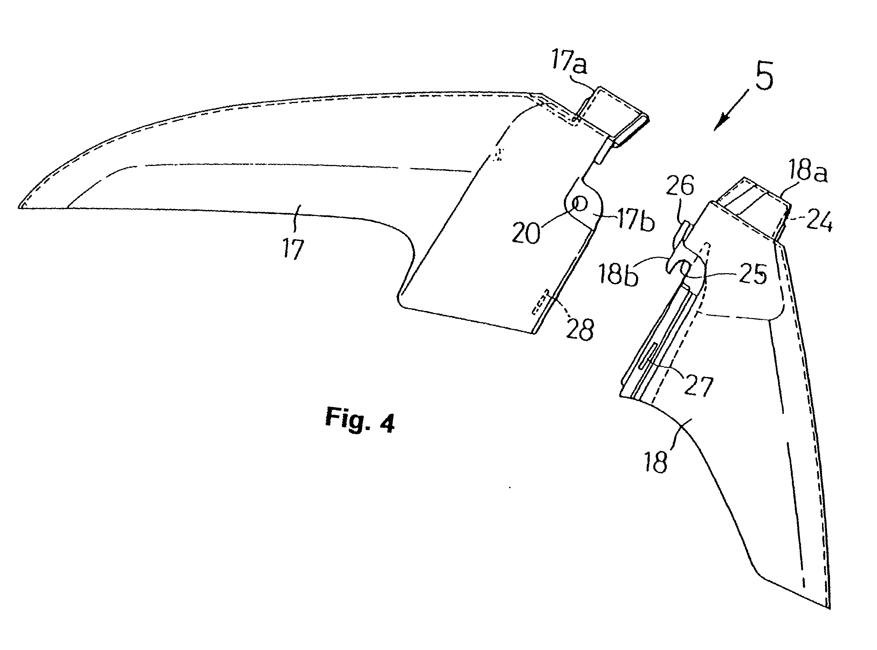

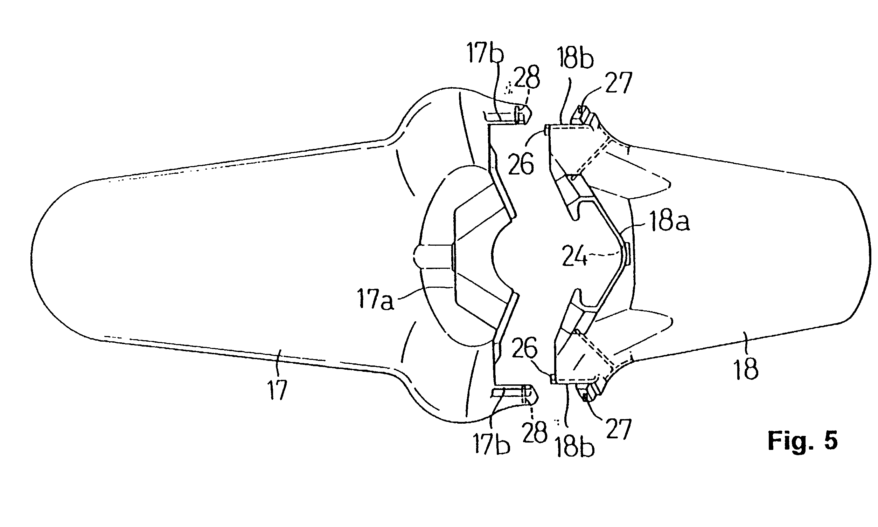

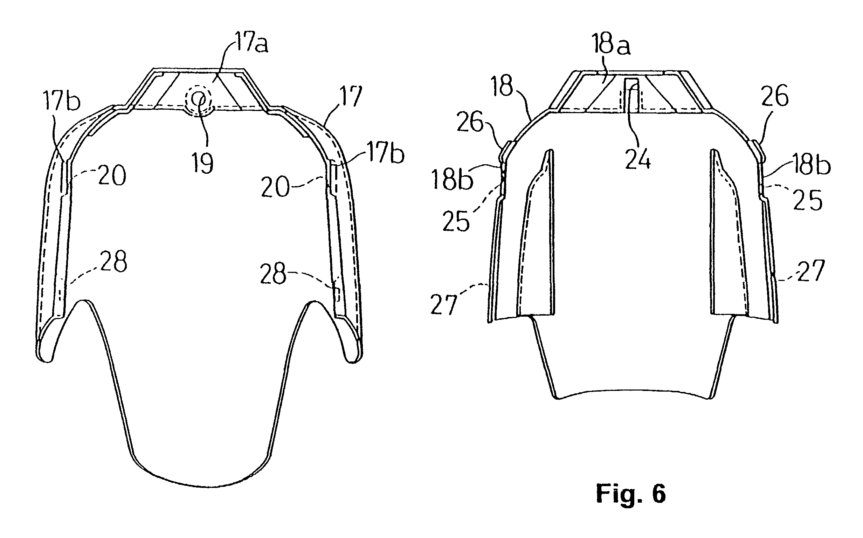

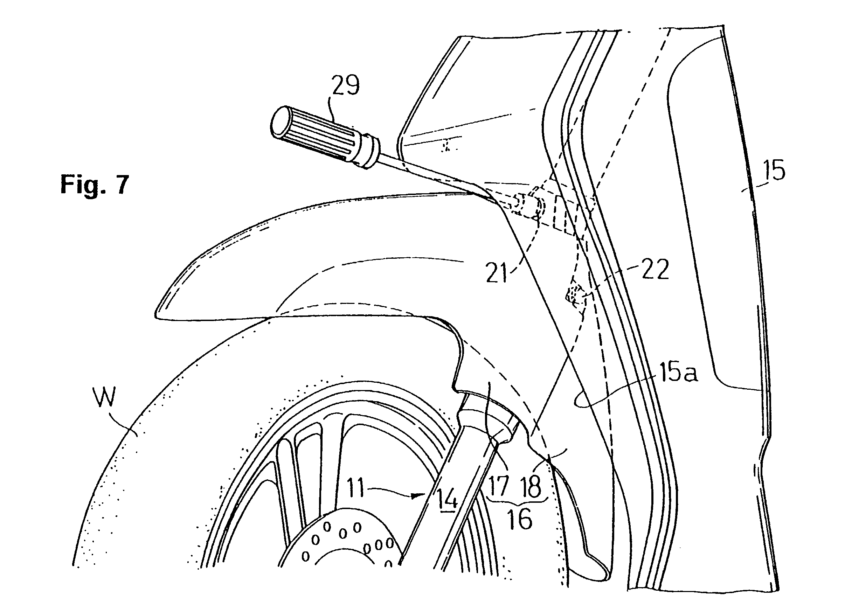

Figs. 1 to 7 show one embodiment of the present invention; wherein Fig. 1 is a side view showing a front fender mounting structure, parts partially cutaway; Fig. 2 is a sectional view taken on line 2-2 of Fig. 1 showing a state in which a leg shield is omitted; Fig. 3 is an exploded perspective view of a front fender; Fig. 4 is a exploded side view of the front fender; Fig. 5 is a plan view seen in the direction of an arrow 5 of Fig. 4; Fig. 6 is a front view showing opposite ends of a fender front half member and a fender rear half member; and Fig. 7 is a perspective view showing a state in which a front fork is turned leftward from the state shown in Fig. 1.

Referring to Figs. 1 and 2, a head pipe H is provided at the front end portion of a body frame F of a scooter type motor-bicycle, and a front fork 11 for rotatably supporting a front wheel W is operably supported by the head pipe H. The front fork 11 is turnably supported on the head pipe H, and it includes at the upper end a steering shaft 12 mounting a steering handle (not shown), a bottom bridge 13 provided at the lower end of the steering shaft 12 in such a manner as to be protruded right and left, and a pair of right and left front cushions 14, 14 extending downward with the upper ends thereof connected to both the ends of the bottom bridge 13. A front wheel w is rotatably supported by the lower ends of the front cushions 14, 14.

The front portion of the body frame F is covered with a leg shield 15 which is disposed for covering the front side of legs of a driver mounted on the scooter type motor-bicycle. The front wheel W is covered with a front fender 16. The front fender 16 is disposed in a recessed portion 15a provided on the front surface of the lower portion of the leg shield 15. The recessed portion 15a is formed in such a shape as to allow the motion of the front fender 16 accompanied by the steering operation of the front fork 11.

Referring to Figs. 3, 4, 5 and 6, the front fender 16 is composed of a synthetic resin made fender front half member 17 and a synthetic resin made fender rear half member 18 which can be separated from each other, and it is mounted on the bottom bridge 13 of the front fork 11 in such a manner as to cover the upper side of the front wheel w.

An upper mounting portion 17a for covering the upper portion of the bottom bridge 13 from the front surface side is provided on the upper portion of the fender front half member 17, and side mounting portions 17a, 17b are each provided on right and left portions of the rear portion of the front fender half member 17. A screw member 21 inserted in an insertion hole 19 provided in the upper mounting portion 17a is screwed with the front surface of the upper portion of the bottom bridge 13; and screw members 22, 22 inserted in insertion holes 20, 20 provided in the side mounting portions 17b, 17b are each screwed with both the side surfaces of the bottom bridge 13.

An upper mounting portion 18a for covering the upper portion of the bottom bridge 13 from the rear surface side is provided on the upper portion of the fender rear half member 18; and side mounting portions 18b, 18b held between the side mounting portions 17b, 17b of the fender front half member 17 and the right and left side ends of the bottom bridge 13 are respectively provided on the right and left portions of the front portion of the fender rear half member 18. An engagement hole 24 as an engagement portion removably engaged with a locking pin 23 as a locking portion provided projecting reaward from the rear surface of the upper portion of the bottom bridge 13 is provided on the upper mounting portion 18a, and insertion grooves 25, 25 opened downward are each provided in the side mounting portions 18b, 18b. The screw members 22, 22 inserted in the insertion holes 20, 20 of the side mounting portions 17b, 17b of the fender front half member 17 are each inserted in the insertion grooves 25, 25. Namely, the right and left front portions of the fender rear half portion 18 and the right and left rear portions of the fender front half member 17 are co-fastened to the bottom bridge 13 by means of the screw members 22, 22.

Engagement projecting portions 26, 26, which are to be elastically engaged with the inner surface sides of the upper portions of the right and left sides of the rear portion of the fender front half member 17, each integrally project from the upper portions of the right and left sides of the front portion of the fender rear half member 18. Slots 27, 27 longer in the vertical direction are each formed in the lower portions of the right and left sides of the front portion of the fender rear half member 18. On the other hand, engagement claws 28, 28 substantially L-shaped and extending downward are each provided on the inner surfaces of the lower portions of the right and left sides of the rear portion of the fender front half member 17. The engagement claws 28, 28 can be each engaged with the slots 27, 27.

The screw member 21 for fastening the upper mounting portion 17a of the fender front half member 17 to the bottom bridge 13 is present at a position difficult to be operated from the outside of the recessed portion 15a due to the obstruction of the leg shield 15 when the front wheel W is in the straight traveling position, as shown in Fig. 1. However, as shown in Fig. 7, the screw member 21 can be rotated by turning the front wheel W on the right or left side and inserting a rotating tool 29 in the recessed portion 15a. Namely, the rotation of the screw member 21, that is, the mounting/dismounting operation of the upper portion of the fender front half member 17 to the bottom bridge 13 can be performed under the presence of the leg shield 15. Also, the screw members 22, 22 for co-fastening the right and left rear portions of the fender front half members 17 and the right and left front portions of the fender rear half member 18 to the bottom bridge 13 are present at positions operable from the outside of the recessed portion 15a in the state in which the front wheel W is in the straight traveling position, as shown in Fig. 1.

Next, the function of this embodiment will be described. The fender front half member 17 removably mountable from the outside of the recessed portion 15a of the leg shield 15, is removably fixed on the bottom bridge 13 by means of the screw members 21, 22, 22. Then, the engagement hole 24, which is provided in the rear surface of the upper portion of the fender rear half member 18 constituting the front fender 16 in combination with the fender front half member 17, is engaged with the locking pin 23 of the bottom bridge 13, and the right and left front portions of the fender rear half member 18 removably mountable from the outside of the recessed portion 15a are removably fixed on the bottom bridge 13 by means of the screw members 22, 22. Accordingly, the fender front half member 17 and the fender rear half member 18, that is, the fender member 16 can be mounted/dismounted on/from the bottom bridge 13 even under the presence of the leg shied 15. This makes it possible to improve the workability upon maintenance, and to freely select the assembling order for the leg shield 15 and the front fender 16 resulting in the increased degree of freedom in the assembling order.

Moreover, the right and left rear portions of the fender front half member 17 and the right and left front portions of the fender rear half member 18 are co-fastened to the bottom bridge 13 by means of the screw members 22, 22, so that the number of mounting parts can be reduced.

While the preferred embodiment of the present invention has been described in detail, the present invention is not limited thereto and various changes in design are possible without departing from the scope of the claims.

For example the present invention may be applied to a cycle-car having one front wheel and two rear wheels.

In summary it is an object to mount/dismount a front fender under the presence of a leg shield for improving workability upon maintenance and increasing the degree of freedom in assembling order in a motorcycle or a tricycle in which a front fender composed of a fender front half member and a fender rear half member which can be separated from each other is mounted on a bottom bridge of a front fork and a recessed portion in which the front fender is disposed in such a manner as to be allowed in the motion accompanied by the steering operation of the front fork is provided in the front surface of the lower portion of a led shield.
The fender front half member 17 is removably fixed to the bottom bridge 13 from the outside of the recessed portion 15a of the leg shield 15; and the right and left front portions of the fender rear half portion 18 having on the upper portion an engagement portion 24 removably engageable with a locking portion 23 provided on the rear portion of the bottom bridge 13 are removably fixed to the bottom bridge 13 from the outside of the recessed portion 15a.

## Claims

1. A motorcycle or a tricycle with a front fender mounting structure in which a front fender (16) composed of a fender front half member (17) and a fender rear half member (18) which can be separated from each other is mounted on a bottom bridge (13) of a front fork (11) in such a manner as to cover the upper side of a front wheel (W) rotatably supported by said front fork (11), and a recessed portion (15a) in which said front fender (16) is disposed in such a manner as to be allowed in the motion accompanied by the steering operation of said front fork (11) is provided in the front surface of the lower portion of a leg shield (15) for covering the front side of legs of a driver, characterized in that
said fender front half member (17) is removably fixed to said bottom bridge (13) from the outside of said recessed portion (15a) of said leg shield (15);
the right and left front portions of said fender rear half member (18) having on the upper portion an engagement portion (24) removably engageable with a locking portion (23) provided on the rear portion of said bottom bridge (13) are removably fixed to said bottom bridge (13) from the outside of said recessed portion (15a); and
engagement claws (28,28) substantially L-shaped and extending downward, each provided on the lower portions of the right and left sides of the rear portion of the fender front half member (17), are engageable with slots (27,27) formed in the lower portions of the right and left sides of the front portion of the fender than half member (18).

2. A motorcycle or a tricycle according to claim 1, wherein the slots (27,27) are longer in the vertical direction.

3. A motorcycle or a tricycle according to claim 1, wherein the right and left rear portions of said fender front half member (17) and the right and left front portions of said fender rear half member (18) are co-fastened to said bottom bridge (13) by means of screw members (22) rotatable from the outside of said recessed portion (15a) of said leg shield (15).

4. A motorcycle or tricycle according to claim 2, wherein insertion grooves (25, 25) opened downward are each provided on the right and left portions of the front portion of the fender rear half member (18) and said screw members (22) are inserted in the insertion grooves (25, 25).

## Patentansprüche

1. Motorrad oder Dreirad mit einer Anbringungsstruktur für eine vordere Schutzabdeckung, bei der eine vordere Schutzabdeckung (16), die zusammengesetzt ist aus einem vorderen Hälftenteil (17) der Schutzabdeckung und einem hinteren Hälftenteil (18) der Schutzabdeckung, die voneinander getrennt werden können, an einer unteren Brücke (13) einer Vordergabel (11) derart angebracht ist, daß die obere Seite eines durch die Vordergabel (11) drehbar gehaltenen Vorderrads (W) abgedeckt wird, und bei der ein ausgesparter Abschnitt (15a), in welchem die vordere Schutzabdeckung (16) derart angeordnet ist, daß die durch die Lenkoperation der Vordergabel (11) begleitete Bewegung erlaubt ist, in der Vorderfläche des unteren Abschnitts eines Fußschilds (15) zum Abdecken der vorderen Seite von Füßen eines Fahrers vorgesehen ist, dadurch gekennzeichnet, daß
das vordere Hälftenteil (17) der Schutzabdeckung lösbar an der unteren Brücke (13) von der Außenseite des ausgesparten Abschnitts (15a) des Fußschilds (15) befestigt ist;
die rechten und linken vorderen Abschnitte des hinteren Hälftenteils (18) der Schutzabdeckung, die an dem oberen Abschnitt einen Eingriffsabschnitt (24) aufweisen, der in lösbaren Eingriff bringbar ist mit einem an dem hinteren Abschnitt der unteren Brücke (13) vorgesehenen Verriegelungsabschnitt (23), an der unteren Brücke (13) von der Außenseite des ausgesparten Abschnitts (15a) lösbar befestigt sind; und
Eingriffsklauen (28, 28), die im wesentlichen L-förmig sind und sich nach unten erstrecken, die jeweils an den unteren Abschnitten der rechten und linken Seiten des hinteren Abschnitts des vorderen Hälftenteils (17) der Schutzabdeckung vorgesehen sind, in Eingriff bringbar sind mit Schlitzen (27, 27), die in den unteren Abschnitten der rechten und linken Seiten des vorderen Abschnitts des hinteren Hälftenteils (18) der Schutzabdeckung ausgebildet sind.

2. Motorrad oder Dreirad nach Anspruch 1, wobei die Schlitze (27, 27) länger in der Vertikalrichtung sind.

3. Motorrad oder Dreirad nach Anspruch 1, wobei die rechten und linken hinteren Abschnitte des vorderen Hälftenteils (17) der Schutzabdeckung sowie die rechten und linken vorderen Abschnitte des hinteren Hälftenteils (18) der Schutzabdeckung zusammen befestigt sind an der unteren Brücke (13) mittels Schraubteilen (22), die von der Außenseite des ausgesparten Abschnitts (15a) des Fußschilds (15) drehbar sind.

4. Motorrad oder Dreirad nach Anspruch 2, wobei nach unten geöffnete Einsetznuten (25, 25) jeweils an den rechten und linken Abschnitten des vorderen Abschnitts des hinteren Hälftenteils (18) der Schutzabdeckung vorgesehen sind und die Schraubteile (22) in die Einsetznuten (25, 25) eingesetzt sind.

## Revendications

1. Motocyclette ou tricycle avec une structure de montage de garde-boue avant dans lequel un garde-boue avant (16), constitué d'un élément moitié avant de garde-boue (17) et d'un élément moitié arrière de garde-boue (18) pouvant être séparés l'un de l'autre, est monté sur un pont inférieur (13) d'une fourche avant (11) d'une manière telle qu'il recouvre le côté supérieur d'une roue avant (W) supportée de manière rotative par ladite fourche avant (11) et une partie en creux (15a), dans laquelle ledit garde-boue avant (16) est disposé d'une manière telle qu'il permette le mouvement accompagné par l'opération de changement de direction de ladite fourche avant (11), est prévue sur la surface avant de la partie inférieure d'un protège-jambes (15) destiné à couvrir la face avant des jambes d'un conducteur, caractérisé en ce que
ledit élément moitié avant de garde-boue (17) est fixé de manière amovible audit pont inférieur (13) à partir de l'extérieur de ladite partie en creux (15a) dudit protège-jambes (15) ;
les parties avant droite et gauche dudit élément moitié arrière de garde-boue (18), comportant sur la partie supérieure une partie d'engagement (24) pouvant s'engager de manière amovible avec une partie de blocage (23) prévue sur la partie arrière dudit pont inférieur (13), sont fixées de manière amovible audit pont inférieur (13) à partir de l'extérieur de ladite partie en creux (15a) ; et
des pinces d'engagement (28, 28) sensiblement en forme de L et s'étendant vers le bas, chacune étant prévue sur les parties inférieures des cotés droit et gauche de la partie arrière de l'élément moitié avant de garde-boue (17), peuvent s'engager avec des fentes (27, 27) formées dans les parties inférieures des cotés droit et gauche de la partie avant de l'élément moitié arrière de garde-boue (18).

2. Motocyclette ou tricycle selon la revendication 1, dans lequel les fentes (27, 27) sont plus longues dans la direction verticale.

3. Motocyclette ou tricycle selon la revendication 1, dans lequel les parties arrière droite et gauche dudit élément moitié avant de garde-boue (17) et les parties avant droite et gauche dudit élément moitié arrière de garde-boue (18) sont fixées en commun audit pont inférieur (13) au moyen d'éléments à vis (22) pouvant être tournés depuis l'extérieur de ladite partie en creux (15a) dudit protège-jambes (15).

4. Motocyclette ou tricycle selon la revendication 2, dans lequel des gorges d'insertion (25, 25) ouvertes vers le bas sont prévues chacune sur les parties droite et gauche de la partie avant de l'élément moitié arrière de garde-boue (18) et lesdits éléments à vis (22) sont insérées dans les gorges d'insertion (25, 25).
